# EUROPÄISCHE PATENTANMELDUNG

(11) **EP 0 978 705 A2**
(43) Veröffentlichungstag der Anmeldung: **09.02.2000**
(21) Anmeldenummer: 99113981.7
(22) Anmeldetag: 17.07.1999
(51) Int. Cl.: G01C 21/20

(54) **Verfahren zur Routenberechnung in einem Navigationsgerät und Navigationsgerät zur Ausführung dieses Verfahrens**

(30) Priorität: 06.08.1998 DE 19835558
(71) Anmelder: ROBERT BOSCH GMBH, 70442 Stuttgart (DE)
(72) Erfinder: Rychlak, Stefan, 31241 Ilsede (DE)

(57) **Zusammenfassung**

Die vorliegende Erfindung betrifft ein Verfahren zur Routenberechnung in einem Navigationsgerät für ein Fahrzeug, insbesondere für ein Kraftfahrzeug, von einem Standort zu einem von einem Benutzer vorbestimmten Zie!ort, sowie ein Navigationsgerät zum Ausführen dieses Verfahrens. Hierbei werden in die Routenberechnung öffentliche Verkehrsmittel einbezogen.

## Beschreibung

### Technisches Gebiet

Die Erfindung betrifft ein Verfahren zur Routenberechnung in einem Navigationsgerät für ein Fahrzeug, insbesondere für ein Kraftfahrzeug, von einem Standort zu einem von einem Benutzer vorbestimmten Zielort, gemäß dem Oberbegriff des Anspruchs 1. Die Erfindung betrifft ferner ein Navigationsgerät zur Routenberechnung in einem Fahrzeug, insbesondere einem Kraftfahrzeug, von einem Standort zu einem von einem Benutzer vorbestimmten Zielort, gemäß dem Oberbegriff das Anspruchs 10.

### Stand der Technik

In einem Fahrzeug, wie beispielsweise Kraftfahrzeug, fest installierte Navigationssysteme leiten einen Führer des Fahrzeugs schnell, einfach und sicher an einen gewünschten Zielort, ohne daß dieser vorher aufwendig eine Route planen und entsprechendes Kartenmaterial erwerben bzw. studieren muß. Hierzu liegen entsprechende, beispielsweise auf Karten, Landkarten oder Straßenkarten basierende, Navigationsdaten in dem Navigationssystem, beispielsweise auf CD-ROM gespeichert, vor. Das Navigationsgerät nutzt beispielsweise GPS (Global Positioning System) um einen momentanen Standort festzustellen und entsprechende Navigationsanweisungen zu berechnen, welche zu einem vorbestimmten Ziel führen. Die Navigationsdaten beinhalten dabei vorzugsweise Daten über Straßen und Wege für Kraftfahrzeuge.

Herkömmliche Navigationsgeräte sind derart ausgelegt, daß sie eine Route für eine Fortbewegung ausschließlich mit dem Kraftfahrzeug berechnen. Im Rahmen eines steigenden Umweltbewußtseins und verstärkter Parkplatznot, beispielsweise in Ballungszentren, bevorzugen Benutzer immer mehr öffentliche Verkehrsmittel. Hierbei steht ihnen jedoch das ihnen ggf. vertraute Navigationsgerät nicht helfend zur Verfügung, was als großer Nachteil empfunden wird.

### Darstellung der Erfindung, Aufgabe, Lösung, Vorteile

Es ist Aufgabe der vorliegenden Erfindung, ein verbessertes Verfahren der obengenannten Art sowie ein verbessertes Navigationsgerät der o.g. Art zur Verfügung zu stellen, welche die obengenannten Nachteile beseitigen und eine flexiblere Routenplanung bzw. Routenberechnung erlauben.

Diese Aufgabe wird durch ein Verfahren der o.g. Art mit den in Anspruch 1 gekennzeichneten Merkmalen und durch ein Navigationsgerät der o.g. Art mit den in Anspruch 10 gekennzeichneten Merkmalen gelöst.

Dazu ist es bei dem Verfahren erfindungsgemäß vorgesehen, daß in die Routenberechnung öffentliche Verkehrsmittel einbezogen werden.

Dies hat den Vorteil, daß durch die zusätzliche Einbindung von öffentlichen Verkehrsmitteln, beispielsweise als Park & Ride-Funktion, ein Individualverkehr beispielsweise in Ballungsgebieten reduziert wird und ggf. am gewünschten Zielort vorhandene Parkplatzengpässe reduziert werden. Dies schafft gleichzeitig eine Entlastung der Umwelt von Abgasen und Schadstoffemissionen, wobei eine Reisezeit von dem Standort zum vorbestimmten Zielort unter Einbeziehung öffentlicher Verkehrsmittel gegenüber einer ausschließlichen Benutzung des Fahrzeugs durch Stauumgehung oder hoher Geschwindigkeit des öffentlicher Verkehrsmittel ggf. reduziert ist.

Vorzugsweise Weitergestaltungen der Vorrichtung sind in den Ansprüchen 2 bis 9 beschrieben.

Zweckmäßigerweise werden solche öffentliche Verkehrsmittel berücksichtigt, welche einen derartigen Park & Ride Parkplatz aufweisen, der an ein öffentliches Verkehrsmittel mit einer Haltestelle im Bereich des Zielortes anbindet.

Damit der Benutzer selbst entscheiden kann, ob die aktuelle Routenberechnung öffentliche Verkehrsmittel mit einbinden soll oder nicht, werden diejenigen öffentliche Verkehrsmittel mit Park & Ride Parkplatz, der an ein öffentliches Verkehrsmittel mit einer Haltestelle im Bereich des Zielortes anbindet, einem Benutzer zur optionalen Auswahl angeboten.

Lange Wartezeiten für den Fall, daß die berechnete Route wenigstens ein öffentliches Verkehrsmittel enthält, werden dadurch vermieden, daß, ein aktueller Fahrplan dieses öffentlichen Verkehrsmittels für die gesamte Routenberechnung berücksichtigt wird. Hierbei ist der Fahrplan im Navigationsgerät, beispielsweise in einem Datenspeicher, gespeichert oder wird mittels einer Datenverbindung, insbesondere einer Funktelefonverbindung, in das Navigationsgerät geladen. Der Datenspeicher kann eine CD-ROM, eine Diskette oder ein anderes Speichermedium sein.

Zweckmäßigerweise wird als Zielort der Route ein Park & Ride Parkplatz eines öffentlichen Verkehrsmittels verwendet, welches eine Haltestelle in einem vorbestimmten Umkreis des von dem Benutzer vorbestimmten Zielortes aufweist. Dieser vorbestimmte Umkreis entspricht in seinem Radius beispielsweise einer Entfernung, welche zu Fuß in einer vorbestimmten Zeit zurücklegbar ist, beispielsweise eine Gehminute bis fünf Gehminuten.

Ferner ist es bei dem Navigationsgerät der o.g. Art zur Lösung der obigen Aufgabe erfindungsgemäß vorgesehen, daß eine erste Einrichtung zum Zuführen von Streckendaten von öffentlichen Verkehrsmitteln an das Navigationsgerät vorgesehen ist.

Dies hat den Vorteil, daß in die Routenberechnung auch öffentliche Verkehrsmittel, beispielsweise als Park & Ride-Funktion, eingebunden werden können, wodurch ein Individualverkehr beispielsweise in Ballungsgebieten reduziert wird und ggf. am gewünschten Zielort vorhandene Parkplatzengpässe reduziert werden. Dies schafft gleichzeitig eine Entlastung der Umwelt von Abgasen und Schadstoffemissionen, wobei eine Reisezeit von dem Standort zum vorbestimmten Zielort unter Einbeziehung öffentlicher Verkehrsmittel gegenüber einer ausschließlichen Benutzung des Fahrzeugs durch Stauumgehung oder hoher Geschwindigkeit des öffentlicher Verkehrsmittel ggf. reduziert ist.

Vorzugsweise Weitergestaltungen des Navigationsgerätes sind in den Ansprüchen 11 bis 13 beschrieben.

Zur zusätzlichen Berücksichtigung von Fahrplandaten bei der Routenberechnung, so daß lange Wartezeiten beim Übergang vom Fahrzeug auf ein öffentliches Verkehrsmittel vermieden werden, ist in besonders vorteilhafter Weise eine zweite Einrichtung zum Zuführen von Fahrplandaten von öffentlichen Verkehrsmitteln an das Navigationsgerät vorgesehen.

In einer bevorzugten Ausführungsform ist die erste und/oder zweite Einrichtung zum Zuführen von Streckendaten bzw. Fahrplandaten von öffentlichen Verkehrsmitteln an das Navigationsgerät ein Datenspeicher, insbesondere eine CD-ROM, oder diese Einrichtung umfaßt eine Datenverbindung, insbesondere über ein Funkgerät oder Funktelefon.

### Kurze Beschreibung der Zeichnungen

Nachstehend wird die Erfindung anhand der beigefügten Zeichnung näher erläutert. Diese zeigt in der einzigen Figur eine schematische Darstellung einer bevorzugten Ausführungsform eines erfindungsgemäßen Navigationsgerätes.

### Bester Weg zur Ausführung der Erfindung

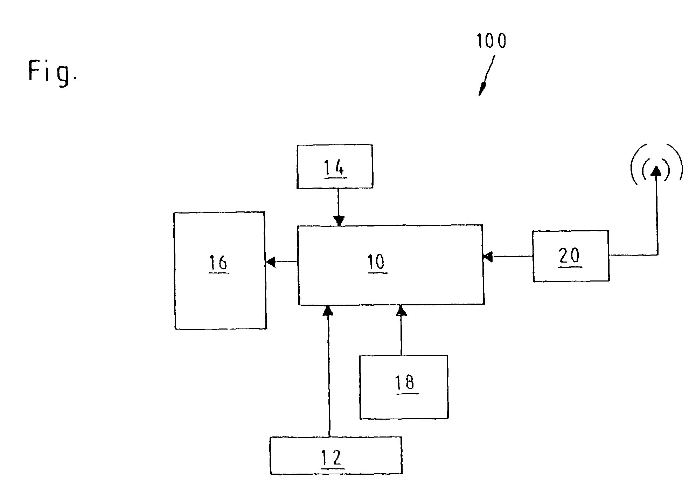

Die in Fig. 1 dargestellte, bevorzugte Ausführungsform eines erfindungsgemäßen Navigationsgerätes 100 umfaßt eine Routenberechnungseinheit 10, welche über eine von einem Benutzer zu bedienende Eingabevorrichtung 12, wie beispielsweise eine Tastatur, einen gewünschten Zielort und ggf. einen aktuellen Standort erhält. Alternativ wird der aktuelle Standort von einem zusätzlichen GPS-Empfänger ermittelt und an die Routenberechnungseinheit 10 übermittelt. Von einem Datenspeicher 14 erhält die Routenberechnungseinheit 10 Daten über ein Verkehrswegenetz und berechnet anhand dieser Daten eine Route von dem Standort zu dem Zielort. Diese Route und ggf. aktuelle Fahrhinweise, wie beispielsweise "rechts abbiegen" oder "geradeaus", zeigt die Routenberechnungseinheit 10 auf einem Display 16 dem Benutzer an.

Erfindungsgemäß ist zusätzlich eine erste Einrichtung 18 vorgesehen, welche zusätzlich zu den Kartendaten aus dem Speicher 14 auch Streckendaten von öffentlichen Verkehrsmitteln an die Routenberechnungseinheit 10 übermittelt. Diese können dann von letzterer zur Routenberechnung mit berücksichtigt werden, d.h. die von der Routenberechnungseinheit 10 berechnete Reiseroute kann auch wenigstens ein öffentliches Verkehrsmittel, wie beispielsweise eine S-Bahn oder U-Bahn, enthalten.

Wenn von dem Benutzer beispielsweise ein Zielort eingegeben wird, welcher in seinem Einzugsgebiet wenigstens einen sogn. Park & Ride Parkplatz aufweist, so wird dem Benutzer die Auswahlmöglichkeit angeboten diesen Service zu nutzen. Park & Ride bedeutet hierbei, daß der Benutzer mit seinem Fahrzeug einen Parkplatz an einer Haltestelle eines öffentlichen Verkehrsmittels anfahren und dort direkt auf das jeweilige öffentliche Verkehrsmittel umsteigen kann. Ein derartiger Service wird beispielsweise von Städten und Ballungsgebieten angeboten, wobei in einem Bereich außerhalb des Ballungsgebietes entsprechende Park & Ride Parkplatze zur Verfügung stehen und die dort haltenden öffentlichen Verkehrsmittel in das Ballungsgebiet hinein führen. Der Benutzer erspart sich somit eine unangenehme Parkplatzsuche in diesem Ballungsgebiet und muß sich mit seinem Fahrzeug nicht durch einen ggf. stockenden oder stauenden Verkehr quälen. Oftmals ist sogar eine Reisezeitverkürzung möglich, da öffentliche Verkehrsmittel nicht von Stau oder Überlastung im Individualverkehr betroffen sind.

Zur Abstimmung der von der Routenberechnungseinheit 10 bestimmten Route mit einem Fahrplan des einzubindenden öffentlichen Verkehrsmittels ist in vorteilhafter Weise eine zweite Einrichtung 20 vorgesehen, welche entsprechende Fahrplandaten des einzubindenden öffentlichen Verkehrsmittels an die Routenberechnungseinheit 10 überträgt. Diese stimmt bei der Berechnung der Reiseroute diese derart ab, daß sich möglichst kurze Wartezeiten für den Benutzer beim Umstieg vom Fahrzeug auf das öffentliche Verkehrsmittel ergeben.

In dem dargestellten Ausführungsbeispiel ist die zweite Einrichtung ein Funktelefon, welches auf Anforderung durch die Routenberechnungseinheit 10 eine Datenverbindung zu einem entfernten Zentralrechner herstellt, der alle Fahrplandaten öffentlicher Verkehrsmittel und ggf. aktuelle Störungen oder Betriebseinschränkungen bei diesen enthält. Von diesem Zentralrechner werden dann über das Funktelefon 20 die benötigten Fahrplandaten abgerufen. Alternativ ist statt des Funktelefons auch ein im Navigationsgerät vorgesehener Datenspeicher, wie beispielsweise eine CD-ROM, vorgesehen.

Auf diese Weise wird, wenn als Ziel eine Innenstadt eines Ballungszentrums angegeben wird, von der Routenberechnungseinheit 10 als Zielort ein Park & Ride Parkplatz außerhalb des Ballungsgebietes mit entsprechender Anbindung an das Netz der öffentlichen Verkehrsmittel dieses Ballungsgebietes verwendet. An diesem Parkplatz stellt der Benutzer sein Fahrzeug ab und steigt auf ein öffentliches Verkehrsmittel um, wobei zur Routenberechnung der Fahrplan des öffentlichen Verkehrsmittels berücksichtigt wird. Erfindungsgemäß wird somit die Navigation in Navigationsgeräten 100 um eine wichtige Routenauswahl erweitert.

## Patentansprüche

1. Verfahren zur Routenberechnung in einem Navigationsgerät für ein Fahrzeug, insbesondere für ein Kraftfahrzeug, von einem Standort zu einem von einem Benutzer vorbestimmten Zielort,
dadurch gekennzeichnet, daß
in die Routenberechnung öffentliche Verkehrsmittel einbezogen werden.

2. Verfahren nach Anspruch 1,
dadurch gekennzeichnet, daß
solche öffentliche Verkehrsmittel berücksichtigt werden, welche einen derartigen Park & Ride Parkplatz aufweisen, der an ein öffentliches Verkehrsmittel mit einer Haltestelle im Bereich des Zielortes anbindet.

3. Verfahren nach Anspruch 1 oder 2,
dadurch gekennzeichnet, daß
diejenigen öffentliche Verkehrsmittel mit Park & Ride Parkplatz, der an ein öffentliches Verkehrsmittel mit einer Haltestelle im Bereich des Zielortes anbindet, einem Benutzer zur optionalen Auswahl angeboten werden.

4. Verfahren nach einem der vorhergehenden Ansprüche,
dadurch gekennzeichnet, daß
für den Fall, daß die berechnete Route wenigstens ein öffentliches Verkehrsmittel enthalten soll, ein aktueller Fahrplan dieses öffentlichen Verkehrsmittels für die gesamte Routenberechnung berücksichtigt wird.

5. Verfahren nach Anspruch 4,
dadurch gekennzeichnet, daß
der Fahrplan im Navigationsgerät gespeichert ist oder mittels einer Datenverbindung, insbesondere einer Funktelefonverbindung, in das Navigationsgerät geladen wird.

6. Verfahren nach Anspruch 4 oder 5,
dadurch gekennzeichnet, daß
der Fahrplan in dem Navigationsgerät in einem Datenspeicher, insbesondere auf einer CD-ROM, einer Diskette oder einem anderen Speichermedium gespeichert ist.

7. Verfahren nach einem der vorhergehenden Ansprüche,
dadurch gekennzeichnet, daß
als Zielort der Route ein Park & Ride Parkplatz eines öffentlichen Verkehrsmittels verwendet wird, welches eine Haltestelle in einem vorbestimmten Umkreis des von dem Benutzer vorbestimmten Zielortes aufweist.

8. Verfahren nach Anspruch 7,
dadurch gekennzeichnet, daß
der vorbestimmte Umkreis vom Benutzer vorbestimmbar ist.

9. Verfahren nach Anspruch 7 oder 8,
dadurch gekennzeichnet, daß
der vorbestimmte Umkreis in seinem Radius einer Entfernung entspricht, welche zu Fuß in einer vorbestimmten Zeit zurücklegbar ist, beispielsweise eine Gehminute bis fünf Gehminuten.

10. Navigationsgerät (100) zur Routenberechnung in einem Fahrzeug, insbesondere einem Kraftfahrzeug, von einem Standort zu einem von einem Benutzer vorbestimmten Zielort,
dadurch gekennzeichnet, daß
eine erste Einrichtung (18) zum Zuführen von Streckendaten von öffentlichen Verkehrsmitteln an das Navigationsgerät (100) vorgesehen ist.

11. Navigationsgerät (100) nach Anspruch 10,
dadurch gekennzeichnet, daß
eine zweite Einrichtung (20) zum Zuführen von Fahrplandaten von öffentlichen Verkehrsmitteln an das Navigationsgerät (100) vorgesehen ist.

12. Navigationsgerät (100) nach Anspruch 10 oder 11,
dadurch gekennzeichnet, daß
die erste und/oder zweite Einrichtung (18,20) zum Zuführen von Strekkendaten bzw. Fahrplandaten von öffentlichen Verkehrsmitteln an das Navigationsgerät ein Datenspeicher, insbesondere eine CD-ROM ist.

13. Navigationsgerät nach Anspruch 10 oder 11,
dadurch gekennzeichnet, daß
die erste und/oder zweite Einrichtung (18,20) zum Zuführen von Strekkendaten bzw. Fahrplandaten von öffentlichen Verkehrsmitteln an das Navigationsgerät eine Datenverbindung, insbesondere über ein Funkgerät oder Funktelefon, umfaßt.
